# EUROPEAN PATENT APPLICATION

(11) **EP 0 955 504 A1**
(43) Date of publication of application: **10.11.1999**
(21) Application number: 99830092.5
(22) Date of filing: 23.02.1999
(51) Int. Cl.: F24D 3/16

(54) **Flooring manufacture for the realization of modular heated floors**

(30) Priority: 25.02.1998 IT PG980010
(71) Applicant: Bricca, Claudio, Perugia, Località Casaglia (IT)
(72) Inventor: Bricca, Claudio, Perugia, Località Casaglia (IT)
(74) Representative: Baldi, Claudio

(57) **Abstract**

Flooring manufacture for the realization of modular heated floors internally characterized in that it internally comprises a section of pipe (2), whose ends are positioned on the sides of the manufacture (1) and provided with fast-coupling pipe fittings (3) for connection with similar sections of pipe contained in identical adjoining manufactures (1).

## Description

This patent application for industrial invention concerns a flooring manufacture for the realization of modular heated floors.

The current technology already offers heated floors that internally comprise pipes for the passage of hot water or other heating liquid. In fact, this type of floors is particularly appreciated in rooms characterized by elegant clean shapes, where the presence of wall radiators could be considered as aesthetically unpleasant.

Moreover, this type of floors is also appreciated for the high thermal efficiency and for the capacity of creating a balanced pleasant microclimate.

It must be noted, however, that their diffusion has been restricted so far by some constructive difficulties and practical inconveniences.

As regards the realization of similar floors, it must be pointed out that the only technology available so far requires first of all the laying of the pipes and then their inclusion in the casting of agglomerate material (mainly concrete), which, once it has solidified, creates the pier on which the finishing coating is then laid.

All this involves quite long operative times, as well as the intervention of three specific professional categories: the first one to design the pipe arrangement; the second one to lay the pipes and the third one to cast the agglomerate material that will incorporate the system.

Besides, this traditional type of heated floors is additionally penalized by its very high price, which is due to the necessary high thickness of the pier.

In this perspective it is easy to understand how similar heated floorscurrently impose quite considerable costs.

From the functional viewpoint, heated floors built with the traditional technology are penalized by a serious inconvenience that can occur if by unfortunate chance one of the pipes incorporated into the pier breaks. Should this occur, there would be no other choice than demolish the floor, in whole or in part, in order to remove the finishing flooring and then break the pier to bring to light the damaged pipe and replace it.

All these inconveniences can be eliminated thanks to the manufacture of the present invention, which allows for the realization of the pier of heated floors in an extremely fast and efficient way.

As anticipated, it is a flooring manufacture having any geometrical shape and size - practically a large tile - that incorporates a section of pipe whose ends are provided with pipe fittings for the fast connection of similar sections of pipe.

In this perspective each manufacture can be considered as a module with standardized shape and structure that can be used, from time to time, in the necessary amount according to the area and the development of the room to be floored.

It is obvious that, as soon as the various pieces are laid on the floor foundation, one next to the other, it is immediately necessary to connect the ends of the pipes contained inside them.

These simple operations already allow for the complete realization of the pier in heated floors. Such pier does not require the long preparation that is typical of the piers realized with the traditional techniques directly in the room to be floored.

It can be noted that the technology according to the invention does not require particularly complex operations, long constructive time and high costs.

On the other hand, thanks to the manufacture according to the invention, the realization of similar floors no longer requires specific abilities in terms of hydraulic systems, since all the necessary knowledge is concentrated in the construction of the prefabricated module.

It is therefore possible to state that the creation of similar heated floors is so easy that it can be considered within the reach of anybody with a minimum experience in the do-it-yourself techniques.

Another considerable advantage of the technology according to the invention is represented by the possibility of easily removing a specific section of damaged pipe. Should this happen, it would no longer be necessary to demolish the whole floor, since it would be possible to remove and replace only the module containing the specific section of damaged pipe.

It can be mentioned that, although the prefabricated manufacture according to the invention is preferably designed for the realization of heated floors, it can only be used to realize heated vertical walls or ceilings of the same type.

It can also be said that the upper surface of the manufacture according to the invention can feature special shapes or profiles which allow for using it not only for the realization of the pier, but also for the final finishing of the floor surface.

For major clarity the description according to the invention continues with reference to the enclosed drawings, which are intended for purposes of illustration and not in a limiting sense whereby:
- fig. 1 shows a pair of flooring manufactures placed one next to the other, in the version in which the ends of the internally incorporated pipe project from the sides of each manufacture;
- fig. 2 is the same as fig. 1, but refers to a pair of manufactures of the type in which the ends of the internally incorporated pipe do not project outwards.

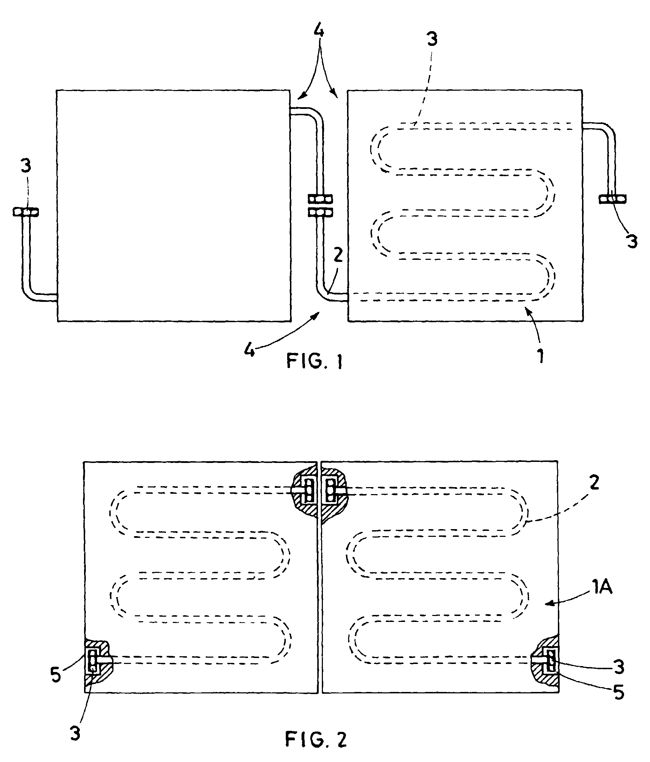

With reference to fig. 1, the object of the invention consists in a prefabricated flooring manufacture (1), which internally incorporates a section of pipe, (2), preferably with a serpentine shape, whose ends project in the sides of the manufacture (1) and are provided with fast coupling pipe fittings (3) for connection with similar sections of tube contained in other identical manufactures (1).

More exactly, figure 1 shows a pair of manufactures (1) laid one next to the other, with their internal serpentines (2) that have already been connected. It can be noted that, due to the lateral presence of the two ends of the serpentine (2), a cavity (4) is created between the two manufactures which will be filled with a suitable filling material.

As regards the realization modes of the manufacture (1), it must be said that it is first necessary to suitably shape the pipe (2); then to place the pipe (2) in a mould, in which the agglomerated material in liquid form (concrete or equivalent material) is cast; once it has solidified, the mass of the agglomerated material irreversibly incorporates the pipe (2), thus creating the flooring manufacture (1) according to the invention.

Figure 2 shows an alternative version of the manufacture (1A), characterized in that it features two niches (5) positioned on opposed sides in the lateral edges, which house the fast coupling pipe fittings (3) located at the ends of the internal serpentine (2).

This second version of the invention is therefore completely free from lateral elements, and therefore two pieces of a similar manufacture (1A) can be directly placed one next to the other, without the need of having a cavity between them.

## Claims

1. Prefabricated flooring manufacture, characterized in that it internally comprises a section of pipe (2), whose ends are positioned on the sides of the manufacture (1) and provided with fast-coupling pipe fittings (3) for connection with similar sections of pipe contained in identical adjoining manufactures (1).

2. Prefabricated flooring manufacture according to claim 1, characterized in that the ends of the section of pipe (2) project on the sides of the manufacture.

3. Prefabricated flooring manufacture, according to claim 1, characterized in that the pipe fittings (3) located at the ends of the section (2) are housed inside corresponding niches (5) created on the sides of the manufacture.

4. Prefabricated flooring manufacture according to the previous claims, characterized in that the internal pipe (2) is in the shape of a serpentine.
